(19) Europäisches Patentamt
European Patent Office
Office européen des brevets

(11) **EP 2 052 208 B1**

(12) **EUROPEAN PATENT SPECIFICATION**

(45) Date of publication and mention
of the grant of the patent:
**09.10.2013 Bulletin 2013/41**

(51) Int Cl.:
**G01C 21/30** (2006.01)   **G05D 1/02** (2006.01)

(21) Application number: **07766329.2**

(22) Date of filing: **23.07.2007**

(86) International application number:
**PCT/GB2007/002771**

(87) International publication number:
**WO 2008/009966 (24.01.2008 Gazette 2008/04)**

(54) **DETERMINING THE LOCATION OF A VEHICLE ON A MAP**

BESTIMMUNG DES ORTES EINES FAHRZEUGES AUF EINER LANDKARTE

DÉTERMINATION DE LA LOCALISATION D'UN VÉHICULE SUR UNE CARTE

(84) Designated Contracting States:
**DE FR GB IT**

(30) Priority:   **21.07.2006   GB 0614530**

(43) Date of publication of application:
**29.04.2009   Bulletin 2009/18**

(73) Proprietor: **TRW Limited**
**Solihull, West Midlands B90 4AX (GB)**

(72) Inventors:
• **TUCKER, Mark, Richard**
**Leicestershire, LE17 4EP (GB)**
• **HEENAN, Adam, John**
**Sheffield S26 4UH (GB)**

(74) Representative: **Harris, David James**
**Barker Brettell LLP**
**100 Hagley Road**
**Edgbaston**
**Birmingham**
**B16 8QQ (GB)**

(56) References cited:
**EP-A- 1 076 276      JP-A- 6 074 778**
**US-A- 4 700 307      US-A1- 2003 125 871**

• **SAWASAKI N ET AL: "Embedded vision system for mobile robot navigation" 15 May 2006 (2006-05-15), ROBOTICS AND AUTOMATION, 2006. ICRA 2006. PROCEEDINGS 2006 IEEE INTERNATIONAL CONFERENCE ON ORLANDO, FL, USA MAY 15-19, 2006, PISCATAWAY, NJ, USA,IEEE, PAGE(S) 2693-2698 , XP010921670 ISBN: 0-7803-9505-0 page 2693, right-hand column, last paragraph; figure 1 page 2697, left-hand column, line 4 - right-hand column, last line figures 8,11**
• **MÖSL KLAUS G ET AL: "New position estimation method based on map matching for planetary rover" EUROPEAN SPACE AGENCY, no. 603, 5 September 2005 (2005-09-05), pages 769-776, XP009091506 Munich**

## Description

This invention relates to a method of determining the location of a vehicle on a map and to related apparatus and programs.

In the United Kingdom, vehicular accident statistics show that 36% of fatal accidents are at, or within, 20 metres of intersections. In Japan, 46% of fatal vehicular accidents occur at or near intersections, whereas in the United States of America, 23% of fatal accidents are at or related to intersections. It is therefore desirable to increase intersection safety.

One of the ways it is proposed this may be achieved is for the vehicle's automatic systems being able to accurately locate the vehicle within an intersection relative to a map of the known features of the intersection. In conjunction with other information about the intersection (such as other vehicle positions, traffic light status and so on) information regarding the position of the vehicle can be used to warn the driver of the vehicle about potential hazards. Position-determining systems such as the Global Positioning System (GPS) are well known, but are of limited accuracy - a positioning error of tens of metres as is possible with GPS is not acceptable in measuring the positioning of a vehicle in an intersection.

The article "New position estimation method based on map matching for planetary rover" by Klaus G. Mösl et al, European Space Agency, no. 603, 5 September 2005 (2005- 09- 05), pages 769- 776, Munich, XP009091506, discloses determining the location of a rover on a map based on points that are identified in images of a scene captured from the rover. The identified points correspond to features in the scene and are compared to points in the map to determine the position of the rover.

According to a first aspect, the invention comprises determining the location of a vehicle on a map, the map comprising a plurality of points associated with features, comprising:

   a) capturing an image of a scene from the vehicle,
   b) identifying points in the image corresponding to features in the scene,
   c) comparing the points in the captured image to the map to determine the position of the vehicle.

Accordingly, the position of a vehicle can be determined using the appearance of the scene surrounding the vehicle.

The invention further comprises the step of capturing at least one further image of the scene, identifying points in the at least one further image and comparing the points identified in the image and the or each further images. By comparing the points of interest found in successive images, the reliability of the system may be increased, as it is likely that if a point is found repeatedly it corresponds to a true point rather than noise in the image, a processing artefact or so on. The position recorded in the map may be a weighted average of the position of the relevant point in successive images.

The step of detecting points in the captured images may comprise detecting any lines in the images. Typically, the method then also comprises the step of detecting as the points the end points of the lines in the image. The detection of lines may comprise detecting edges visible in the images, possibly using a mask such as a Sobel mask.

The invention further comprises the step of measuring the motion of the vehicle and from this predicting where the points in the at least one further image will be. Indeed, the method may comprise the step of looking for points in the at least one further image in the region where they are predicted to be. This has been found to improve the processing efficiency of the method.

Furthermore, by comparing the points in the image and the at least one further image, the method may comprise the steps of determining the motion of the vehicle. By motion we may mean at least one of speed, heading angle, velocity and yaw rate. The motion of the vehicle determined by comparing the points from the differing images may be more accurate than the measurement used to predict the location of the points in the at least one further image; the method may therefore, as a useful by- product, more accurately output the motion of the vehicle than the estimate used during the method.

The step of determining the position of points in the image may comprise the step of transforming the position of points in the image (typically in an image plane) into a position relative to the vehicle (typically on a road plane). This may comprise carrying out a perspective transform. A convenient assumption to make at this point is that the surface is flat; this is not necessary but simplifies calculations.

The image and the at least one further image may be captured using a video camera and may be optical images of the scene. By optical, we typically mean an image captured using visible light, or alternatively IR or UV light. Alternatively, the image may be RADAR, LIDAR, SONAR or other similar images of the scene.

The step of predicting where points will be in the at least one further image may comprise modelling the motion of the vehicle. This may be performed by using a predictive filter, such as a Kalman filter, or an Extended Kalman filter. The predictive filter may take, as an input, the position of the points in the image and the speed and heading angle (and/or yaw rate). The filter would then output predicted positions of the points.

In order to predict the position of the points thus predicted in the at least one further image, it may be necessary to perform an inverse perspective transform to transform the position of the points relative to a surface (such as a road surface) into the position in the at least one further image. The transform may be of the form:

$$x = \frac{hX}{H - Y}$$

and

$$z = \frac{fh}{H - Y}$$

where X and Y are the image co-ordinates referenced from the centre of the line of the captured image, H is indicative of the position of the horizon, f is the focal length of the camera, h is the height of the camera above the ground, z is the distance from the camera in the direction in which the camera is pointing and x the distance from the camera in the perpendicular direction.

The step of looking for points in the at least one further image in the region where they are predicted to be may comprise, for each point searching only a region of interest the at least one further image determined according to the predicted position of that point. This avoids unnecessary line detection in areas that are not of interest.

Where lines are detected, the step of comparing points in the image and the at least one further image may comprise determining the angle of the line relative to a datum and comparing the points corresponding to a line only if the angle is within an expected range. This avoids confusing points in successive images that are not related. Furthermore, the method may also comprise determining the length of the line and comparing the points corresponding to a line only if the length is within an expected range.

Once the points have been compared, the actual position in the at least one further image of the points whose position was predicted in the at least one further image may be calculated. From these actual positions, the position of the vehicle on the map may be calculated. Where a predictive filter is used, the actual positions may be used to update the predictive filter. This is especially useful with a Kalman filter or Extended Kalman Filter.

The step of updating the predictive filter may comprise the determination of the vehicle motion from the comparison of the points from the image and the at least one further image. This is especially true of the use of an (extended) Kalman filter, where the motion of the vehicle can conveniently form part of the state of the Kalman filter.

The method may be repeated using successive further images for comparison against each other, thereby plotting the vehicle's movement across the map.

In some cases, such as where the map has multiple possible entry points, it is desirable to have an estimate of the location of the vehicle before using the above method to determine an accurate position. Accordingly, the method may comprise the steps of estimating the position of the vehicle on the map. This is particularly convenient where a predictive filter such as a Kalman filter is used, as the estimate may be used as an initial value for the filter. The estimate of the position may be made, for example, using GPS or other similar means.

The map may, or the plurality of maps may each, comprise a map of an intersection. The features on the map may comprise salient features visible from the road, such as road markings, such as lane markings, stop, "give way" or "yield" lines, road edge marking, directional indicators such as arrows indicating the correct direction of travel in a particular lane, aspects of the road surface such as potholes or manhole covers or the like. In more detail, the points may form the outline of features on the road surface, and may mark the ends of lines formed by the edges of features on the road surface. Alternatively or additionally, the points may define the centre line of elongate road markings, such as lane markings.

In a preferred embodiment of the invention, the method comprises selecting the map from a plurality of maps dependent upon the position of the vehicle. This allows maps to be provided for multiple areas of interest - such as intersections - with no maps being provided for areas that are not of interest - such as long stretches of road with no intersections. The position of the vehicle may be determined, for the purpose of selecting a map, by a positioning system (such as GPS) or by searching the plurality of maps for matches to points visible in the scene from the vehicle. Alternatively, maps may be provided to the vehicle by means of a wireless network connection on the approach to the area covered by the map.

The vehicle may be a road vehicle, such as a car. Alternatively, it may be a waterborne vessel such as a boat or an aircraft such as an aeroplane or helicopter.

Indeed, this may be viewed as desirable in itself. We therefore provide, according to a second aspect of the invention, a method of determining the location of a vehicle, comprising determining the position of a vehicle according to a first position estimate, selecting a map from a plurality of maps according to the first position estimate, and locating the position of the vehicle on the map to generate a second, more accurate, position estimate. This requires only a limited number of higher accuracy maps to be provided for areas of interest, rather than indiscriminately mapping and storing maps for an entire area.

Preferably, the step of generating a second position estimate comprises using the method of the first aspect of the invention.

According to a third aspect of the invention, there is provided a vehicle location apparatus, comprising an image capture apparatus and a processor, in which the processor is arranged to carry out, in use, the method of the first or second aspects of the invention. Preferably, the image capture apparatus is a camera, typically a video camera.

According to a fourth aspect of the invention, there is provided a program which, when loaded onto a suitable processor, causes the processor to carry out the method of the first or second aspect of the invention.

There now follows, by way of example only, embodiments of the invention described with reference to the accompanying drawings, in which:

Figure 1 shows a car fitted with an apparatus according to a first embodiment of the invention;

Figure 2 shows the use of the apparatus of Figure 1 in capturing images of the scene surrounding the vehicle;

Figure 3 shows the vehicle of Figure 1 located on a map;

Figure 4 is a flow diagram showing the method carried out by the apparatus of Figure 1;

Figure 5 shows a sample image captured by the apparatus of Figure 1;

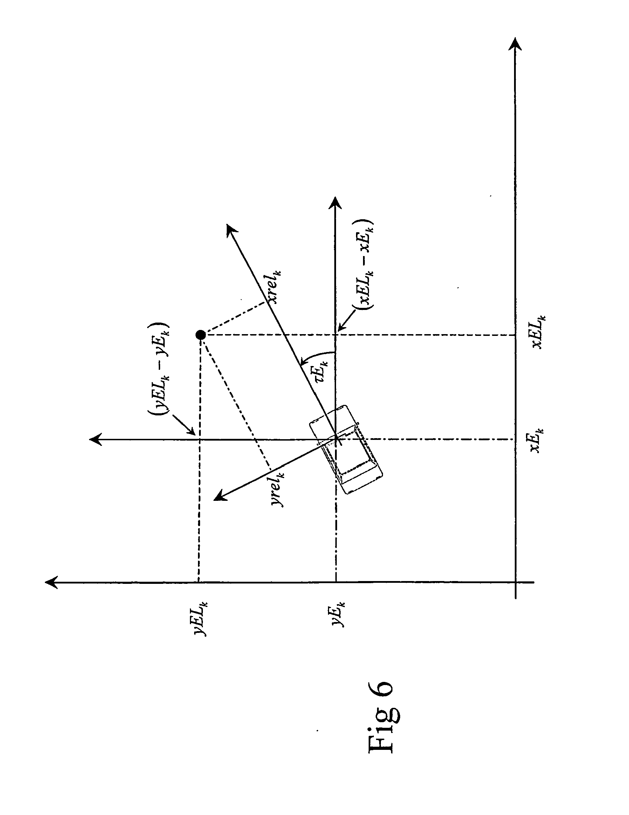

Figure 6 shows the relationship between different coordinate systems for locating the vehicle on the map of Figure 3;

Figure 7 shows the data flow through the apparatus of Figure 1; and

Figure 8 shows the operation of the Extended Kalman Filter of the apparatus of Figure 1.

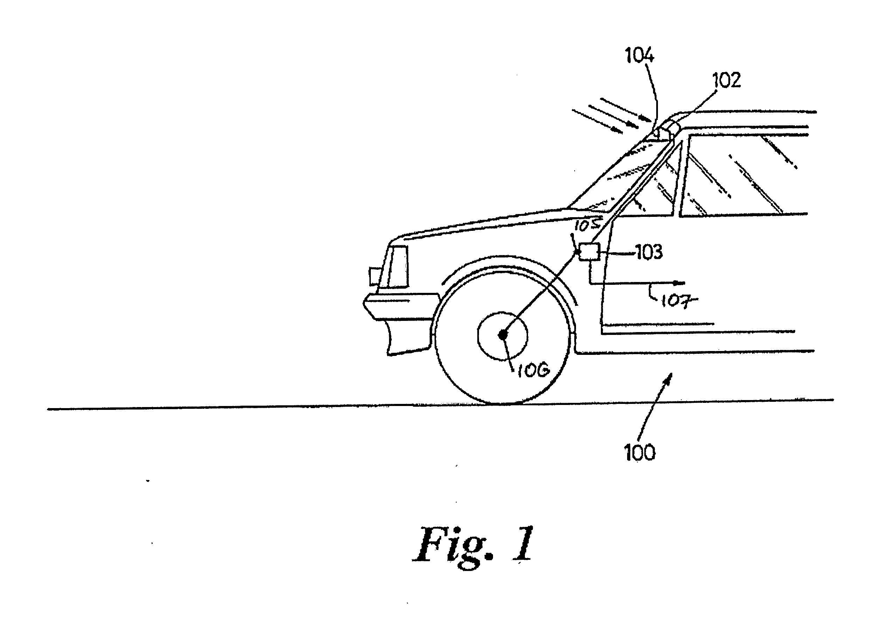

A car 100 is shown in Figure 1, fitted with an apparatus according to an embodiment of the present invention. The apparatus comprises a video camera 102 arranged to capture images of the scene ahead of the vehicle. The camera is, in the present embodiment, based on a National Semiconductor greyscale CMOS device with a 640x480 pixel resolution. Once every 40ms, a window - 640x240 pixels in size - is captured from the centre of the imager field of view using a Cameralink™ Framegrabber.

These images are then fed into processor 103. This has an input 105 for an output of a wheel speed and yaw rate sensor 106 of the car 100 (although this sensor could be two discrete sensors). The processor 103 also has an output 107, on which the position of the vehicle on a map is output as described below. This output can be displayed to the driver on a suitable display (not shown) or used in further calculations to determine whether the vehicle is at risk.

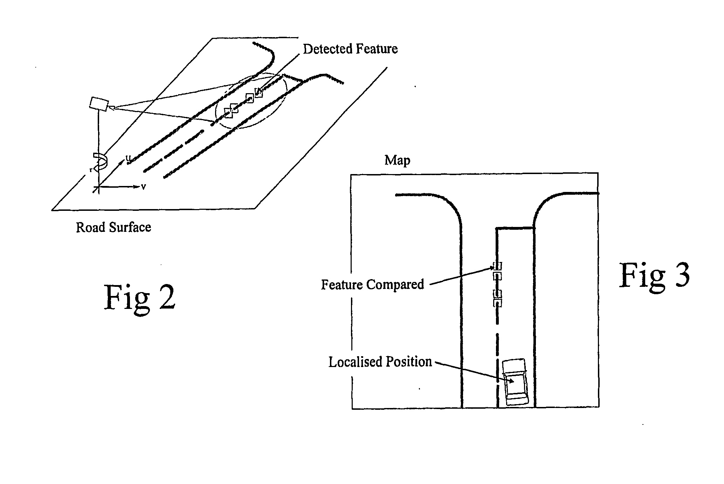

The system design is based upon the concept of comparing a low-level feature map of known visual landmarks of, say, an intersection with a processed image from a video camera mounted in the vehicle. The map (shown in Figure 3) comprises a list of points relating to features on the road throughout an intersection. The points denote the ends of lines forming shapes on the road. The vehicle's position and motion with respect to the map can be estimated by tracking the measurements of the positions of these features relative to the vehicle using a tracking filter. This is shown in Figure 2 and 3 of the accompanying drawings.

With reference to Figure 2, assuming that the position of the vehicle is approximately known, for example using a GPS sensor (not shown) or by searching for features found in a captured image as described below, the system can predict the position of lines on the road surface for the next image captured. The position of each line is then measured by searching for the predicted lines in the captured image. Each predicted line then has a position measurement associated with it.

Once the lines have been associated, the error between the prediction and measurement can be determined. The error is used to correct the position estimate of the vehicle within the intersection, and hence position the vehicle on the map (Figure 3). This new vehicle position estimate is then used to predict the position of the lines in the next image ready for the next iteration of the localisation algorithm.

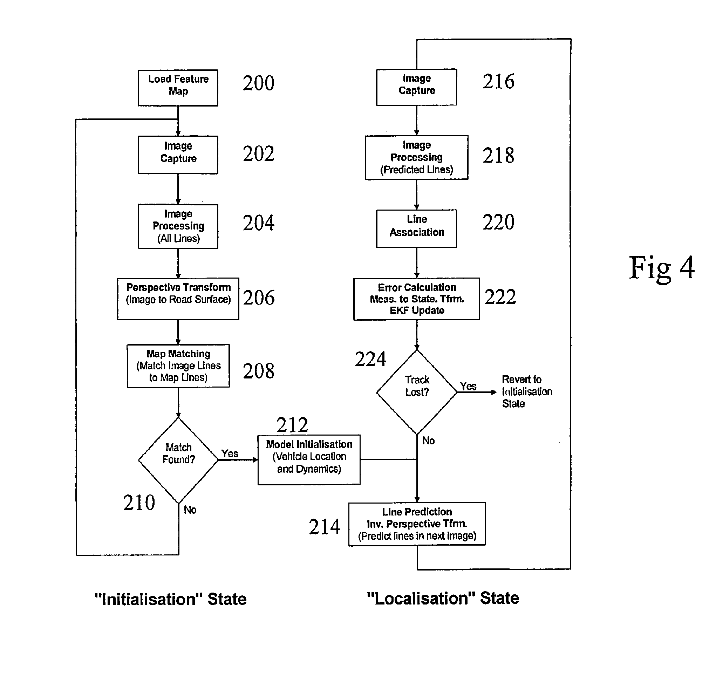

These features will now be described in more detail with respect to Figure 4 of the accompanying drawings.

When the system is first activated, it is set into an "initialisation" state in which it attempts to find the approximate position of the vehicle within the intersection. The system will search for a unique pattern of lines during the approach to the intersection. In the "load feature map" step 200, a map is loaded into memory so that there is fast access to the information when the system is running. The feature map is stored in a text file containing Cartesian coordinates for each end of the lines. The feature map also contains information about the type of lines in the map (for example a centre-line or outline of an arrow).

In the next step 202, an image is captured into the processor 103. The image is made available to the image processing functions as a 2-D array of integer values representing pixel intensity (0 to 255). Immediately after the image is captured, a timestamp, which is read from the vehicle CAN bus, is stored for use when outputting the vehicle location.

The image-processing step 204 follows. The image is processed with a Sobel edge detection kernel, plus optimised line tracing and line combination algorithms to extract parameterised line endpoints in image coordinates. The system will detect either centre lines or outlines of visible road markings (for example, centre of dashed lines, centre of stop lines, outline of directional arrows, etc). During initialisation, the system will search for all lines within the image. The system determines the position of the lines by recording the points corresponding to their endpoints.

In perspective transform step 206, each of the detected lines is transformed from the image into the equivalent position on the road surface using a perspective transform (PT). Perspective transforms are well known in the art. The PT uses a simple model of the imager and lens to translate pixel positions in the image into relative positions on the road surface. To reduce algorithm complexity, the current PT implementation is based on the assumption that the road ahead of the vehicle is flat; whilst this reduces the complexity of the algorithm, this assumption is not strictly necessary. This transformation allows the lines from the image to be compared directly with lines in the map, as both exist in the road surface plane.

Given that the system is still under initialisation, it does not know where the vehicle is. To be able to predict the position of lines in the image, the position of the vehicle needs to be found by "map-matching" (step 208). For each processed image, the map-matching algorithm takes a number of lines from the feature map (say, near the approach to the intersection) and searches through the lines (transformed from the image onto the road surface plane in the previous step) until a match is found. The result of a match will be the location and heading of the vehicle 100 within the intersection.

The map matching function 208 does not require any knowledge of the position of the vehicle. The only exception to this is that in some situations it may be necessary to know which approach road the host vehicle is travelling on (which can be obtained from GPS) so that the correct portion of the map can be used in the matching process. If multiple maps are provided of different intersections, then it may be necessary to determine which map the vehicle is on, either by applying the map-matching function 208 to all of the maps or by sensing by means of a position sensor (such as GPS) and working out which intersection the vehicle 100 is approaching. In an alternative embodiment, maps may be provided to the vehicle by means of a wireless network connection, such as Wi-Fi beacons on the approach to the area covered by the map.

At step 210, the processor determines whether a match has been found. If a match is found, the method proceeds as described below. If none is found at this stage, the method reverts to the image capture step 202. As the vehicle moves through the junction, it will move until sufficient map lines are in the field of view of the imager and so a match is made.

Once a match is made, the processor initialises (at step 212) a model of the vehicle 100 initialised with vehicle speed, yaw rate and the initial position (as determined by the map-matching function). The system then switches to the "localisation" state in which the vehicle position is tracked through the intersection. In this embodiment, an Extended Kalman Filter (EKF) has been chosen to model and predict the vehicle motion. Kalman filters are well known as a means of estimating information from indirectly related or noisy measurements and are often applied to tracking problems.

The model is a constant velocity, constant yaw rate model with inputs from vehicle wheel speed, yaw rate and the line measurements. The initial location and heading are taken directly from the map-matching result. The initial vehicle dynamics (that is, velocity and yaw rate) are taken from vehicle sensors (wheel speed and yaw rate sensor 106).

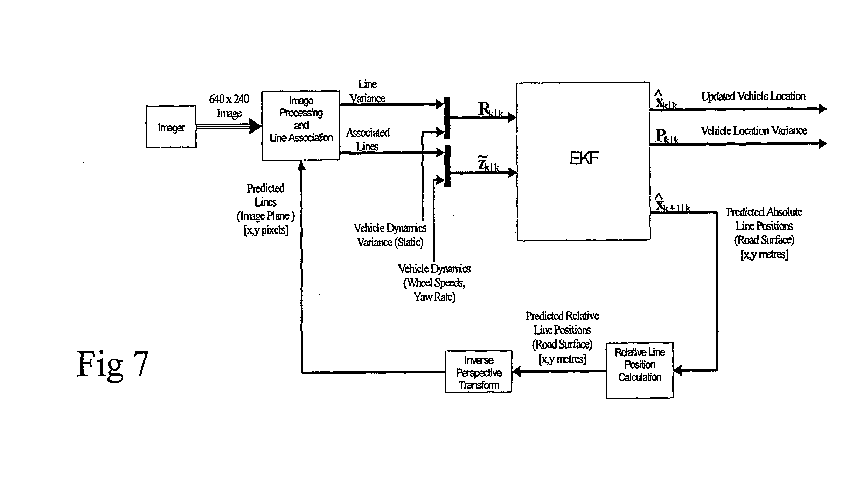

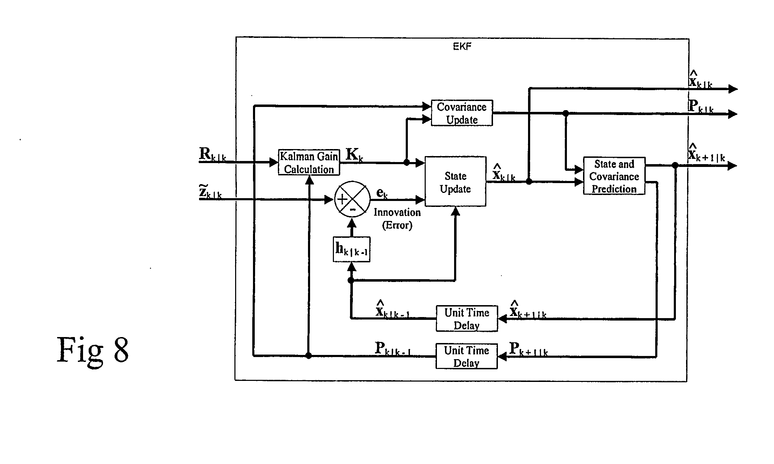

The EKF can then be used to predict (at step 214), from the motion of the vehicle and the previously detected lines, where lines will occur in the next image. The EKF is shown in more detail in Figure 7 and 8 of the accompanying drawings. The EKF takes as inputs the measurements from both the imager and vehicle dynamics sensors combined to form the current measurement vector $\tilde{z}_{k|k}$. The confidence in the measurements (variances) are combined to form diagonal matrix $\boldsymbol{R}_{k|k}$.

The gain of the filter - the Kalman Gain ($\boldsymbol{K}_k$) - is calculated based on both the measurement variance (confidence that the measurement is correct, $\boldsymbol{R}_{k|k}$) and the covariance (confidence that the previous prediction is correct, $\boldsymbol{P}_{k|k-1}$). This is combined with the innovation ($\boldsymbol{e}_k$) - the error between the measurements, transformed into state domain using $\boldsymbol{h}_{k|k-J}$.

This is a calculation which transforms the system state predictions into the measurement domain; this allows the predictions to be subtracted from the measurements to give a measurement error. A similar calculation is embedded into the Kalman Gain ($K_k$) calculation, which is derived from measurement variances and the state covariance. This in turn converts the measurement error (when multiplied by $K_k$) into the state update term according to:

$$\text{Updated State} = \text{Predicted State} + K_k * e_k$$

Once the Kalman Gain is calculated, the previous predictions of the system states ($x_{k|k-1}$) and covariance ($P_{k|k-1}$) are corrected to give the current estimate of the vehicle state ($x_{k|k}$, including the vehicle position and velocity, and the line point positions) and covariance ($P_{k|k}$).

The constant velocity, constant yaw-rate model is then used to predict the state of the vehicle ($x_{k+1|k}$) at the next iteration. The covariance is also predicted using the system model plus a term to describe the process noise of the system. This process noise is a measure of how accurate the model is expected to be (for example, how certain the velocity and yaw-rate is expected to be).

The output from the EKF is therefore the corrected state estimate and covariance for the current image. This provides the current estimate of the vehicles location and heading plus the confidence in that estimate. It also provides an estimate of the position of the lines in the next captured image.

Also in step 214, each of the predicted lines is transformed from the road surface into the resulting image using an inverse perspective transform (IPT). The IPT uses a simple model of the camera and its lens to translate points on the road surface into pixel positions in the imager. To reduce algorithm complexity, the current IPT implementation is based on the assumption that the road ahead of the vehicle is flat. This has the benefit of only having to deal with flat two-dimensional feature maps.

A further image is captured at step 216. However, the processing of this image at step 218 can be accelerated by limiting the search to regions of interest (ROI) around the predicted position of lines within the image. When the search for each line occurs, the system knows what type of line to search for (because it is stored in the feature map). This improves the robustness for line searching because it can select the appropriate line-tracing algorithm.

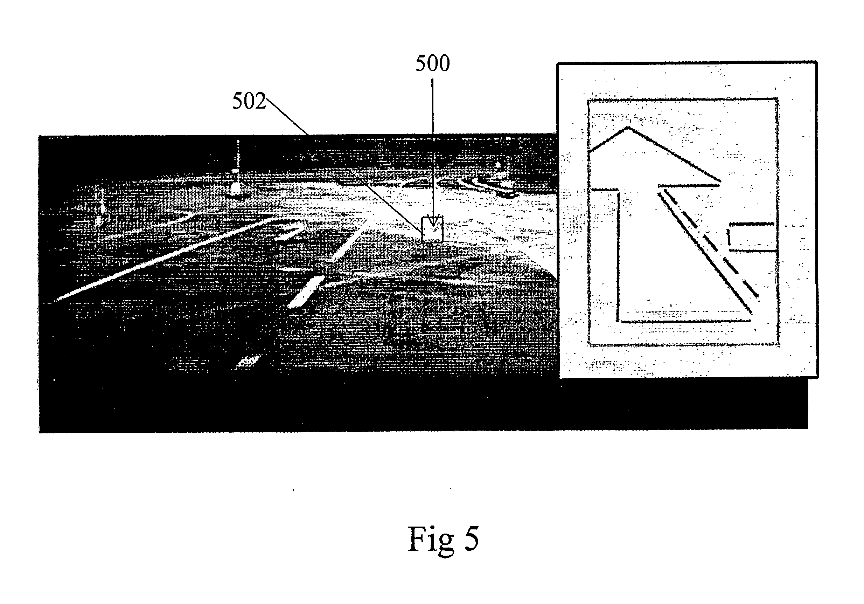

An example captured image can be seen in Figure 5 of the accompanying drawings. This shows an example road marking 500, in which the system has selected a region of interest 502, shown in more detail in the inset of that Figure. The lines relating to that road marking will only be searched for in that region of interest 502. In many cases such as that shown, there will be many lines close together and the image processing will return more than one measured (solid in the Figure) line for each predicted (dashed in the Figure) line. When this occurs, the correct line needs to be associated with the predicted line (step 220).

The line association is performed in the image plane and finds the measured line that best matches the angle, length and position of the predicted line. If a good match is found, the association function assigns a high confidence to that line measurement. If no line match is found, the association function returns the position predicted at the previous iteration and gives a low confidence to the measurement.

Line prediction errors are calculated in the image plane. For these errors to be used to update the vehicle location model, the errors must be transformed from the image plane into the vehicle relative coordinates. They must then be transformed from the vehicle relative coordinates into the absolute coordinates system (as shown in Figure 5 of the accompanying drawings). The image plane to relative coordinates transformation is a function of the imager and lens combination and is the opposite of the IPT discussed above.

As the vehicle moves through the intersection, the absolute vehicle heading will change. When the heading changes, the relative to absolute position function must be re-evaluated.

The combined relationship between line prediction errors and absolute position prediction error is called the measurement to state transformation 222. The vehicle location model states exist in the absolute position coordinates system so that the vehicle position within the intersection can be tracked. The transformation between measurements and states is re-calculated for each iteration of the localisation algorithm and is used to transform both the line measurement and confidence in the measurement into the absolute coordinates system, ready for updating the EKF model.

Once the measurements have been transformed into the correct coordinate system, they can be used directly to update the vehicle model. The vehicle location and dynamics at the time the image was captured are updated using the new measurements. Once the vehicle position and speed are updated for the current image capture, the EKF can predict the location of lines ready for the next captured image. Assuming that the processor has not lost track of the relevant lines, the system repeats from step 214. If the processor does lose the lines, the system reverts to the initialisation state.

The video localisation system of the present embodiment has been tested in two different intersections and provides a localisation accuracy of 10-20cm. The system has been found to be robust providing the road marking landmarks are suitable. Short lines and symbol outlines provide the best landmarks for the system because they provide location information in all directions, whereas long lines may extend outside the field of view and so not provide useful data.

**Claims**

1. A method of determining the location of a vehicle on a map, the map comprising a plurality of points associated with features, comprising:

    a) capturing an image of a scene from the vehicle,
    b) identifying points in the image corresponding to features in the scene,
    c) comparing the points in the captured image to the map to determine the position of the vehicle,

    further comprising the step of capturing at least one further image of the scene, identifying points associated with features in the at least one further image and comparing the points identified in the image and the or each further images, and further comprising the step of measuring the motion of the vehicle and from this predicting where the points in the at least one further image will be.

2. The method of claim 1 in which the step of detecting points in the captured images comprises detecting any lines in the images.

3. The method of claim 2 in which the method comprises the step of detecting as the points the end points of the lines in the image.

4. The method of claim 2 or claim 3 in which the detection of lines comprises detecting edges visible in the images

5. The method of any preceding claim in which the method comprises the step of looking for points in the at least one further image in the region where they are predicted to be.

6. The method of claim 5, in which the step of looking for points in the at least one further image in the region where they are predicted to be comprises for each point searching only a region of interest the at least one further image determined according to the predicted position of that point.

7. The method of any preceding claim, in which the method comprises the steps of determining the motion of the vehicle by comparing the points in the image and the at least one further image.

8. The method of any preceding claim, in which the step of predicting where points will be in the at least one further image comprises modelling the motion of the vehicle, typically by using a predictive filter, such as a Kalman filter, or an Extended Kalman filter.

9. The method of any preceding claim, in which lines are detected and the step of comparing points in the image and the at least one further image comprises determining the angle of each line relative to a datum or the length of the line and comparing the points corresponding to a line only if the angle or length is within an expected range.

10. The method of any preceding claim, in which, once the points have been compared, the actual position in the at least one further image of the points whose position was predicted in the at least one further image is calculated.

11. The method of claim 10 when dependent from claim 8 using a predictive filter, in which the actual positions are used to update the predictive filter.

12. The method of claim 11 in which the step of updating the predictive filter comprises the determination of the vehicle motion from the comparison of the points from the image and the at least one further image.

13. The method of any preceding claim in which the method comprises the steps of estimating the position of the vehicle on the map before determining the position of the vehicle from the captured image.

14. The method of any preceding claim in which the features on the map comprise salient features visible from or on a road.

15. The method of any preceding claim, in which the method comprises selecting the map from a plurality of maps dependent upon the position of the vehicle.

16. The method of claim 15, in which the position of the vehicle may be determined, for the purpose of selecting a map, by a positioning system such as GPS or by searching the plurality of maps for matches to points visible in the scene from the vehicle.

17. A vehicle location apparatus, comprising an image capture apparatus and a processor, in which the processor is arranged to carry out, in use, the method of any preceding claim.

18. A program which, when loaded onto a suitable processor, causes the processor to carry out the method of any of claims 1 to 16.

**Patentansprüche**

1. Ein Verfahren zur Bestimmung des Ortes eines Fahrzeuges auf einer Landkarte, wobei die Landkarte eine Vielzahl von Punkten umfasst, die mit Merkmalen verbunden sind, wozu Folgendes gehört:

   a. Aufnahme eines Szenenbildes vom Fahrzeug aus,
   b. Identifizieren von Punkten im Bild, die den Merkmalen in der Szene entsprechen,
   c. Vergleichen der Punkte im aufgenommenen Bild mit der Landkarte, um die Position des Fahrzeuges zu bestimmen,

   wozu überdies die Aufnahme von mindestens einem weiteren Szenenbild gehört, wobei Punkte, die mit Merkmalen in dem mindestens einen weiteren Bild verbunden sind, identifiziert werden und die im Bild identifizierten Punkte mit dem oder jedem weiteren Bild verglichen werden, und wozu ferner das Messen der Bewegung des Fahrzeuges gehört, sowie die anhand dessen gemachte Vorhersage, wo die Punkte in dem mindestens einen weiteren Bild sein werden.

2. Das Verfahren von Anspruch 1, in dem der Schritt des Ermittelns von Punkten in den aufgenommenen Bildern das Auffinden von Linien in den Bildern umfasst.

3. Das Verfahren von Anspruch 2, in dem zum Verfahren gehört, dass die Endpunkte der Linien im Bild als Punkte aufgefunden werden.

4. Das Verfahren von Anspruch 2 oder Anspruch 3, in dem das Ermitteln von Linien das Auffinden von in den Bildern sichtbaren Kanten umfasst.

5. Das Verfahren von einem vorhergehenden Anspruch, in dem das Verfahren das Suchen nach Punkten in dem mindestens einen weiteren Bild in dem Bereich umfasst, wo sie laut Vorhersage sein sollten.

6. Das Verfahren von Anspruch 5, in dem das Suchen nach Punkten in dem mindestens einem weiteren Bild in dem Bereich, wo sie laut Vorhersage sein sollten, beinhaltet, dass für jeden Punkt nur ein Bereich von Interesse abgesucht wird, wobei das mindestens eine weitere Bild gemäß der vorhergesagten Position dieses Punktes bestimmt wird.

7. Das Verfahren von einem vorhergehenden Anspruch, in dem das Verfahren das Ermitteln der Bewegung des Fahrzeuges durch den Vergleich der Punkte im Bild und dem mindestens einen weiteren Bild umfasst.

8. Das Verfahren von einem vorhergehenden Anspruch, in dem die Vorhersage, wo sich die Punkte in dem mindestens einen weiteren Bild befinden werden, die Modellierung der Bewegung des Fahrzeuges umfasst, wofür typischerweise ein Vorhersagefilter, etwa ein Kalman-Filter oder ein erweiterter Kalman-Filter herangezogen wird.

9. Das Verfahren von einem vorhergehenden Anspruch, in dem Linien aufgefunden werden und das Vergleichen von Punkten im Bild und dem mindestens einen weiteren Bild die Bestimmung des Winkels von jeder Linie relativ zu einem Bezugspunkt oder der Länge der Linie umfasst, sowie das Vergleichen der Punkte, die nur mit einer Linie übereinstimmen, wenn der Winkel oder die Länge innerhalb eines erwarteten Bereiches liegt.

**10.** Das Verfahren von einem vorhergehenden Anspruch, in dem nach dem Vergleichen der Punkte die tatsächliche Position der Punkte, deren Position in dem mindestens einen weiteren Bild vorhergesagt wurde, in dem mindestens einen weiteren Bild berechnet wird.

**11.** Das Verfahren von Anspruch 10, wobei in Abhängigkeit von Anspruch 8 ein Vorhersagefilter verwendet wird, in dem die tatsächlichen Positionen verwendet werden, um den Vorhersagefilter zu aktualisieren.

**12.** Das Verfahren von Anspruch 11, in dem das Aktualisieren des Vorhersagefilters die Ermittlung der Fahrzeugbewegung aus dem Vergleich der Punkte aus dem Bild und dem mindestens einen weiteren Bild umfasst.

**13.** Das Verfahren von einem vorhergehenden Anspruch, in dem das Verfahren die Einschätzung der Position des Fahrzeuges auf der Landkarte umfasst, bevor die Position des Fahrzeuges aus dem aufgenommenen Bild ermittelt wird.

**14.** Das Verfahren von einem vorhergehenden Anspruch, in dem die Merkmale auf der Landkarte hervorstechende Merkmale umfassen, die von oder auf der Straße zu sehen sind.

**15.** Das Verfahren von einem vorhergehenden Anspruch, in dem das Verfahren das Auswählen der Landkarte aus einer Vielzahl von Landkarten in Abhängigkeit von der Position des Fahrzeuges umfasst.

**16.** Das Verfahren von Anspruch 15, in dem die Position des Fahrzeuges zum Zwecke der Auswahl einer Landkarte durch ein Positionierungssystem wie GPS oder durch Absuchen der Vielzahl von Landkarten auf Übereinstimmungen mit Punkten, die in der Szene vom Fahrzeug aus sichtbar sind, bestimmt werden kann.

**17.** Eine Vorrichtung zur Fahrzeugortung, die einen Apparat zur Bildaufnahme sowie einen Prozessor umfasst, wobei der Prozessor angeordnet ist, um im Einsatz das Verfahren eines vorhergehenden Anspruchs durchzuführen.

**18.** Ein Programm, das nach dem Laden auf einen geeigneten Prozessor, den Prozessor veranlasst, das Verfahren von einem der Ansprüche 1 bis 16 durchzuführen.


## Revendications

**1.** Un procédé de détermination de l'emplacement d'un véhicule sur une carte, la carte comprenant une pluralité de points associés à des caractéristiques, comprenant :

 a. la capture d'une image d'une scène à partir du véhicule,
 b. l'identification de points dans l'image correspondant à des caractéristiques dans la scène,
 c. la comparaison des points dans l'image capturée à la carte de façon à déterminer la position du véhicule,

comprenant en outre l'opération de capture d'au moins une autre image de la scène, l'identification de points associés à des caractéristiques dans la au moins une autre image et la comparaison des points identifiés dans l'image et dans la ou chaque autre image, et comprenant en outre l'opération de mesure du déplacement du véhicule et, à partir de cette prédiction, l'emplacement où se situeront les points dans la au moins une autre image.

**2.** Le procédé selon la Revendication 1 dans lequel l'opération de détection de points dans les images capturées comprend la détection de toute ligne dans les images.

**3.** Le procédé selon la Revendication 2 dans lequel le procédé comprend l'opération de détection, en tant que points, des points d'extrémité des lignes dans l'image.

**4.** Le procédé selon la Revendication 2 ou 3 dans lequel la détection de lignes comprend la détection de bordures visibles dans les images.

**5.** Le procédé selon l'une quelconque des Revendications précédentes dans lequel le procédé comprend l'opération de recherche de points dans la au moins une autre image dans la zone où ils sont prédits se trouver.

**6.** Le procédé selon la Revendication 5, dans lequel l'opération de recherche de points dans la au moins une autre image dans la zone où ils sont prédits se trouver comprend pour chaque point, la recherche de seulement une zone d'intérêt dans la au moins une autre image déterminée selon la position prédite de ce point.

**7.** Le procédé selon l'une quelconque des Revendications précédentes, dans lequel le procédé comprend l'opération de détermination du déplacement du véhicule par la comparaison des points dans l'image et dans la au moins une autre image.

**8.** Le procédé selon l'une quelconque des Revendications précédentes, dans lequel l'opération de prédiction de l'emplacement où les points se situeront dans la au moins une autre image comprend la modélisation du déplacement du véhicule, typiquement au moyen d'un filtre prédictif, tel qu'un filtre de Kalman ou un filtre de Kalman étendu.

**9.** Le procédé selon l'une quelconque des Revendications précédentes, dans lequel des lignes sont détectées et l'opération de comparaison de points dans l'image et dans la au moins une autre image comprend la détermination de l'angle de chaque ligne par rapport à une donnée ou la longueur de la ligne et la comparaison des points correspondant à une ligne uniquement si l'angle ou la longueur se situe à l'intérieur d'une plage attendue.

**10.** Le procédé selon l'une quelconque des Revendications précédentes, dans lequel, une fois que les points ont été comparés, la position effective dans la au moins une autre image des points dont la position a été prédite dans la au moins une autre image est calculée.

**11.** Le procédé selon la Revendication 10 lorsqu'elle dépend de la Revendication 8 utilisant un filtre prédictif, dans lequel les positions effectives sont utilisées pour actualiser le filtre prédictif.

**12.** Le procédé selon la Revendication 11 dans lequel l'opération d'actualisation du filtre prédictif comprend la détermination du déplacement du véhicule à partir de la comparaison des points de l'image et de la au moins une autre image.

**13.** Le procédé selon l'une quelconque des Revendications précédentes dans lequel le procédé comprend l'opération d'estimation de la position du véhicule sur la carte avant la détermination de la position du véhicule à partir de l'image capturée.

**14.** Le procédé selon l'une quelconque des Revendications précédentes dans lequel les caractéristiques sur la carte comprennent des caractéristiques saillantes visibles à partir de ou sur une route.

**15.** Le procédé selon l'une quelconque des Revendications précédentes, dans lequel le procédé comprend la sélection de la carte à partir d'une pluralité de cartes en fonction de la position du véhicule.

**16.** Le procédé selon la Revendication 15, dans lequel la position du véhicule peut être déterminée, aux fins de la sélection d'une carte, par un système de positionnement tel qu'un GPS ou par la consultation de la pluralité de cartes à la recherche d'appariements avec des points visibles dans la scène à partir du véhicule.

**17.** Un appareil de localisation de véhicules comprenant un appareil de capture d'images et un processeur, dans lequel le processeur est agencé de façon à exécuter, en utilisation, le procédé selon l'une quelconque des Revendications précédentes.

**18.** Un programme qui, lorsqu'il est chargé sur un processeur adapté, amène le processeur à exécuter l'une quelconque des Revendications 1 à 16.

*Fig. 1*

# Fig 3

Map

Feature Compared

Localised Position

Detected Feature

Road Surface

# Fig 2

Fig 4

Fig 5

Fig 6

Fig 7

Fig 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KLAUS G. MÖSL et al.** New position estimation method based on map matching for planetary rover. *European Space Agency, no. 603,* 05 September 2005, 769-776